# EUROPEAN PATENT APPLICATION

(11) **EP 2 280 512 A1**
(43) Date of publication of application: **02.02.2011**
(21) Application number: 10168475.1
(22) Date of filing: 05.07.2010
(51) Int. Cl.: H04L 12/28, H04L 29/06, H04L 29/08

(54) **Electronic apparatus and control method for remotely processing files**

(30) Priority: 16.03.2010 KR 20100023395; 06.07.2009 IN KO09482009
(71) Applicant: SAMSUNG ELECTRONICS CO., LTD., Suwon-si, Gyeonggi-do (KR)
(72) Inventor: Mishra, Pankaj, 201301, Noida (IN); Lamba, Sarika, Pradesh (IN); Deep Singh, Mankawal, 141001, Punjab (IN)
(74) Representative: Walaski, Jan Filip

(57) **Abstract**

An electronic apparatus and a control method thereof which can remotely process multimedia data stored in peripherals connected to the electronic apparatus are provided. The electronic apparatus comprises a connector to which a peripheral device storing multimedia data is connected; a communication unit which communicates with a plurality of external devices through a network; and a controller which controls the communication unit to broadcast the presence of the multimedia data to the plurality of external devices and transmits the multimedia data to one external device responding to the broadcasting among the plurality of external devices. With this, there are provided an electronic apparatus and a control method thereof capable of easily processing the multimedia data.

## Description

The present invention relates to an electronic apparatus and a control method thereof, and more particularly to an electronic apparatus and a control method thereof which can remotely process multimedia data stored in peripherals connected to the electronic apparatus.

With the recent increase of universal serial bus (USB) memory capacity, it is possible to store a large capacity of multimedia files or the like, and the multimedia files are often executed using an electronic apparatus having a USB interface.

However, the electronic apparatus having the USB interface cannot process the multimedia file, or another electronic apparatus capable of processing the multimedia file may not have the USB interface. In this case, it is inconvenient for a user.

Accordingly, one or more exemplary embodiments provide an electronic apparatus and a control method thereof, which can conveniently process multimedia data.

According to an exemplary embodiment, there is provided an electronic apparatus comprising: a connector to which a peripheral device storing multimedia data is connected; a communication unit which communicates with a plurality of external devices through a network; and a controller which controls the communication unit to broadcast the presence of the multimedia data to the plurality of external devices and transmit the multimedia data to one external device responding to the broadcast among the plurality of external devices.

The electronic apparatus may further comprise a data processor to process the multimedia data, wherein the controller determines whether the data processor can process the multimedia data, and controls the communication unit to broadcast the presence of the multimedia data to the plurality of external devices if it is determined that the data processor cannot process the multimedia data.

The controller may control the communication unit to request information about the capability of each external device to process the multimedia data, and receive a response corresponding to the request if the plurality of external devices respond to the broadcast, and select an optimal external device among the plurality of external devices, to process the multimedia data based on the response.

The controller may control the communication unit to receive converted multimedia data from the selected external device.

The controller may control the connector to request device information of the peripheral device, and control the communication unit to encapsulate and broadcast the device information corresponding to the request in a form that can be received by the plurality of external devices.

The external device responding to the broadcast may logically recognize the peripheral device based on the received encapsulated device information, and the controller may control the communication unit to route the multimedia data to a corresponding external device.

The peripheral device may comprise a USB device.

The controller may generate a software interrupt and starts procedure of recognizing the USB device if the USB device is connected to the connector.

According to an aspect of another exemplary embodiment, there is provided a method of controlling an electronic apparatus, the method comprising: broadcasting the presence of multimedia data stored in a peripheral device connected by a connector to a plurality of external devices; and controlling a communication unit to transmit the multimedia data to one external device among the plurality of external devices which responds to the broadcasting.

The method may further comprise determining whether a data processor can process the multimedia data, wherein the broadcasting comprises broadcasting the presence of the multimedia data to the plurality of external devices if it is determined that the data processor cannot process the multimedia data.

The method may further comprise requesting information about the capability of each external device to process the multimedia data, and receiving a response corresponding to the request if the plurality of external devices respond to the broadcasting; and selecting an optimal external device, among the plurality of external devices, to process the multimedia data based on the response.

The method may further comprise receiving converted multimedia data from the selected external device.

The method may further comprise asking device information of the peripheral device and receiving information corresponding to the asking, wherein the broadcasting comprises encapsulating and broadcasting the device information corresponding to the request in a form that can be received by the plurality of external devices.

The external device responding to the broadcasting may logically recognize the peripheral device based on the received encapsulated device information.

The peripheral device may comprise a USB device.

The method may further comprise generating a software interrupt and starting procedure of recognizing the USB device if the USB device is connected to the connector.

The above and/or other aspects will become apparent and more readily appreciated from the following description of exemplary embodiments, taken in conjunction with the accompanying drawings, in which:
FIG. 1 is a schematic diagram of an electronic apparatus system according to an exemplary embodiment;
FIG. 2 is a control block diagram of the electronic apparatus of FIG. 1;
FIG. 3 is a flowchart showing a control flow of the electronic apparatus of FIG. 1;
FIG. 4 shows a USB host controller driver with hardware;
FIG. 5 shows a remote-USB transmission of USB request; and
FIG. 6 shows a remote-USB transmission of USB response.

Below, exemplary embodiments will be described in detail with reference to the accompanying drawings so as to be easily realized by a person of ordinary skill in the art. The exemplary embodiments may be embodied in various forms without being limited to the exemplary embodiments set forth herein. Descriptions of well-known parts are omitted for clarity, and like reference numerals refer to like elements throughout.

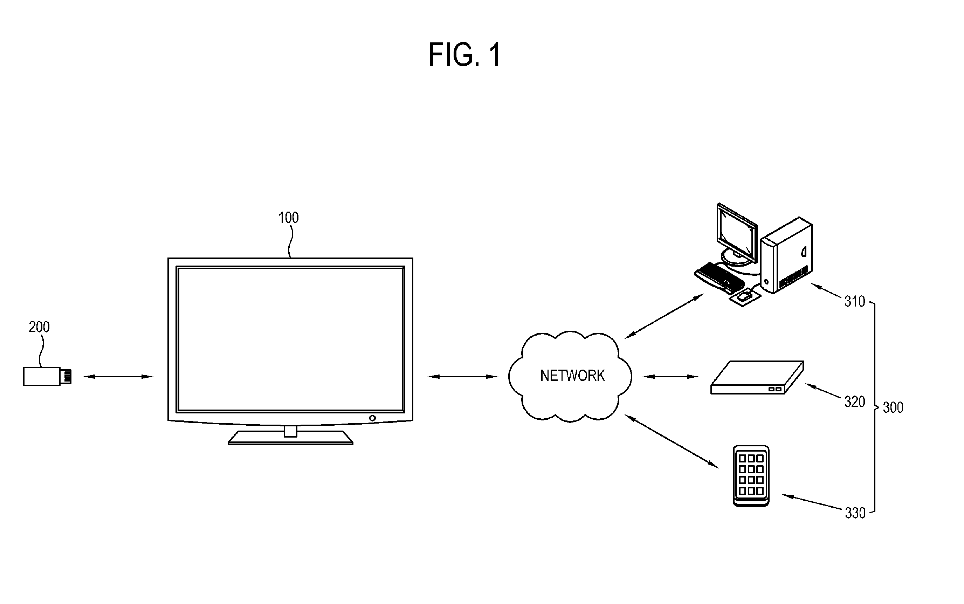

FIG. 1 is a schematic diagram of an electronic apparatus system according to an exemplary embodiment.

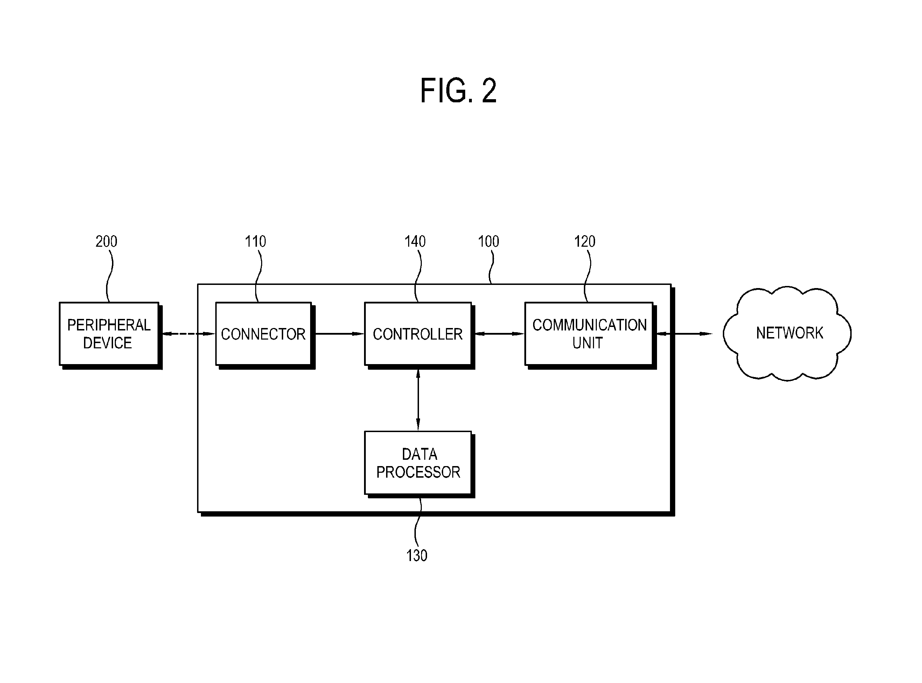

As shown therein, the electronic apparatus system comprises an electronic apparatus 100, a peripheral device 200 and a plurality of external devices 300. The peripheral device 200 is connected to the electronic apparatus 100 through a connector 110, (FIG. 2), and various control signals and data can be transmitted and received through the connector 110. Also, the peripheral device 200 can be connected to the plurality of external devices 300 via a communication network, and transmit and receive various control signals and data through a communication unit 120, (FIG. 2). The electronic apparatus 100 in this exemplary embodiment broadcasts the presence of multimedia data stored in the peripheral device 200 to the plurality of external devices 300, and transmits the multimedia data to the external device responding to the broadcasting. Further, the external device can process received multimedia data and retransmit the processed multimedia data to the electronic apparatus 100.

The electronic apparatus 100 comprises any digital electronic apparatus having the connector 110 to be connected to the peripheral apparatus 200. The electronic apparatus 100 comprises a communication interface which communicates with the connected peripheral device. For example, the electronic apparatus may comprise a digital television (DTV), but is not limited thereto. In the case of the DTV, it may further comprise a broadcasting receiver (not shown), and a display unit (not shown).

The peripheral device 200 may comprise a USB memory or an exterior hard disk drive, but is not limited thereto.

The plurality of external devices can communicate with the electronic apparatus 100 through a network, and provide various services to the electronic apparatus 100 in response to a request signal received from the electronic apparatus 100. For example, the external devices 300 may comprise a personal computer (PC), a digital versatile disc (DVD) and/or BluRay disc (BD) player, a personal digital assistant (PDA), a smart phone, etc. Below, the electronic apparatus 100 will be described in more detail with respect to FIG. 2.

As shown therein, the electronic apparatus 100 comprises the connector 110, the communication unit 120, a data processor 130, and a controller 140 controlling them.

The connector 110 is an interface to which the peripheral device 200, where the multimedia data is stored, is connected, and may comprise a USB interface as shown in FIG. 1.

The communication unit 120 can communicate with the plurality of external devices 300 through a network, thereby enabling wired or wireless network communication. The communication unit 120 may comprise communication protocol for a wireless local area network (WLAN) in a broad sense. Also, the communication unit 120 may comprise a communication module corresponding to Bluetooth, Wi-Fi, Zigbee, and other various communication methods.

The data processor 130 processes the multimedia data to be displayable through the electronic apparatus 100. The multimedia data comprises audio data, moving image data, still image data, and the like. Accordingly, the data processor 130 may comprise an audio signal processor (not shown) for processing the audio data, and a video signal processor (not shown) for processing the moving and still image data.

The controller 140 may control the communication unit 120 to broadcast the presence of the multimedia data to the plurality of external devices 300 and transmit the multimedia data to one of the external devices 300 responding to the broadcast among the plurality of external devices 300.

Before broadcasting, the controller 140 previously determines whether the data processor 130 can process the multimedia data, and controls the communication unit 120 to broadcast the presence of the multimedia data to the plurality of external devices 300 if it is determined that the data processor 130 cannot process the multimedia data.

Meanwhile, if the plurality of external devices 300 responds to the broadcast, the controller 140 may control the communication unit 120 to request information about the capability of each of the plural responding external devices 300 to process the multimedia data, and receive a response corresponding to the request. Also, it is possible to select an optimum external device among the plural responding external devices 300 capable of processing the multimedia data based on the received response.

Thus, the controller 140 may control the communication unit 120 to transmit the multimedia data to the selected external device and receive converted multimedia data to be processed in the electronic apparatus 100.

In the meantime, the controller 140 may control the connector 110 to request and receive device information of the peripheral device 200 when the peripheral device 200 is connected to the connector 110. Also, the controller 140 may control the communication unit 120 to encapsulate and broadcast the received device information in the form that can be received by the plurality of external devices 300.

The external devices 300 responding to the broadcast can logically recognize the peripheral device based on the received encapsulated device information, and the controller 140 can control the communication unit 120 to route the multimedia data to the corresponding external device.

If the peripheral device 200 is a USB memory, the controller 140 generates a software interrupt when the USB memory is connected to the connector 110, and starts a procedure of recognizing the USB memory.

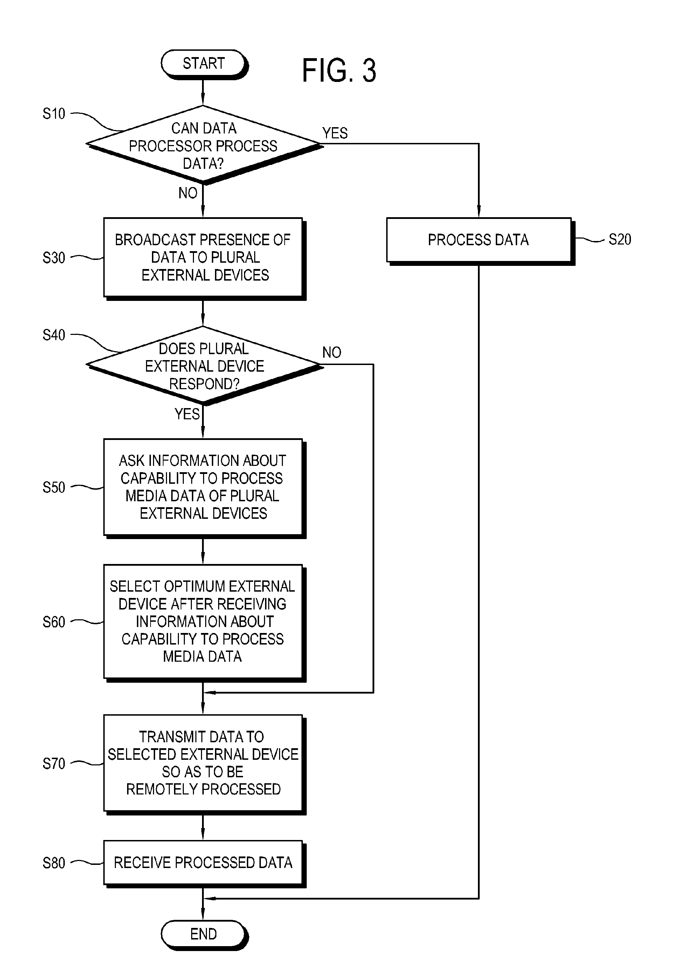

FIG. 3 is a flowchart showing a control flow of the electronic apparatus 100 of FIG. 1.

If the peripheral device 200 having the multimedia data is connected to the connector 110 of the electronic apparatus 100, the controller 140 determines whether the data processor 130 can process the data at operation S10. As a result of determination, if the data processor can process the multimedia data, the multimedia data is processed by the electronic apparatus 100 at operation S20. On the other hand, if the data processor 130 cannot process the multimedia data, the presence of the multimedia data is broadcasted to the plurality of external devices 300 which communicate with the electronic apparatus 100 through a network at operation S30. If the plurality of external devices 300 respond to the broadcast at operation S40, the controller requests information about the capability of the plural responding external devices to process the multimedia data at operation S50. When receiving the information corresponding to the request, the controller 140 selects an optimal external device 300 to process the data based on the received information at operation S60. The controller 140 transmits the data to the selected external device 300 so that the selected external device may remotely process the data at operation S70, and receives the processed data at operation S80.

Referring back to FIG. 1, a realizing scenario of the electronic apparatus according to this exemplary embodiment is as follows.

A TV 100 of FIG. 1 is capable of displaying the multimedia data but has no capability to process it. If the TV does not support a format of audio data existing in the USB memory 200 as the peripheral device connected to the TV, the TV may broadcast the presence of the audio data to the plurality of external devices 300 through the communication unit 120. If the external device responding to the broadcast is a PC, the TV transmits the audio data to the PC along with a request signal for converting the format of the audio data. The PC then retransmits the audio data to the TV in a format which is converted in response to the request signal.

Accordingly, this exemplary embodiment provides an electronic apparatus capable of remotely processing files as a control signal is transmitted from a USB device 200 to an external device 300 via a network, and a control method thereof. In particular, this exemplary embodiment provides an electronic apparatus capable of using the processing capability available on another device in the available network, and a control method thereof. Thus, the electronic apparatus in this exemplary embodiment can transmit a control signal related to a file existing in the peripheral USB device 200 to one of the external devices 300 on the network.

As shown in the previous exemplary embodiment, the electronic apparatus 100 may not have the capability to execute or process the multimedia data stored in the peripheral device 200, but the plurality of external devices which communicate with the electronic apparatus 100 via the network may have the capability or an improved capability to process the multimedia data.

Below, an exemplary embodiment will be described in the case that the peripheral device is used a USB memory.

In this exemplary embodiment, the connector 110 of the electronic apparatus 100 may comprise a USB interface, which comprises a USB host stack.

The USB host stack performs the following processes.

The USB host stack has to allow a USB auto-discovery mechanism to be launched using a pseudo-interrupt.

The general procedure of USB discovery is triggered by an electrical signal, which is generated when a USB's physical connection acts like an electrical sink for the 'D+' line on the host, which is maintained at +5V level. This high-to-low edge transition generates an interrupt on a host CPU which is handled by 'Host-Controller Driver' in the USB host stack, which further notifies the 'USB Core' layer of the stack.

The 'USB Core' then responds to this signal by:
a. Sending a RESET signal to the function
b. Starting the 'USB enumeration' process which ends with activation of an appropriate 'USB Class driver' above 'USB Core' layer and creation of a data + command pipe between host HCI and function device driver.

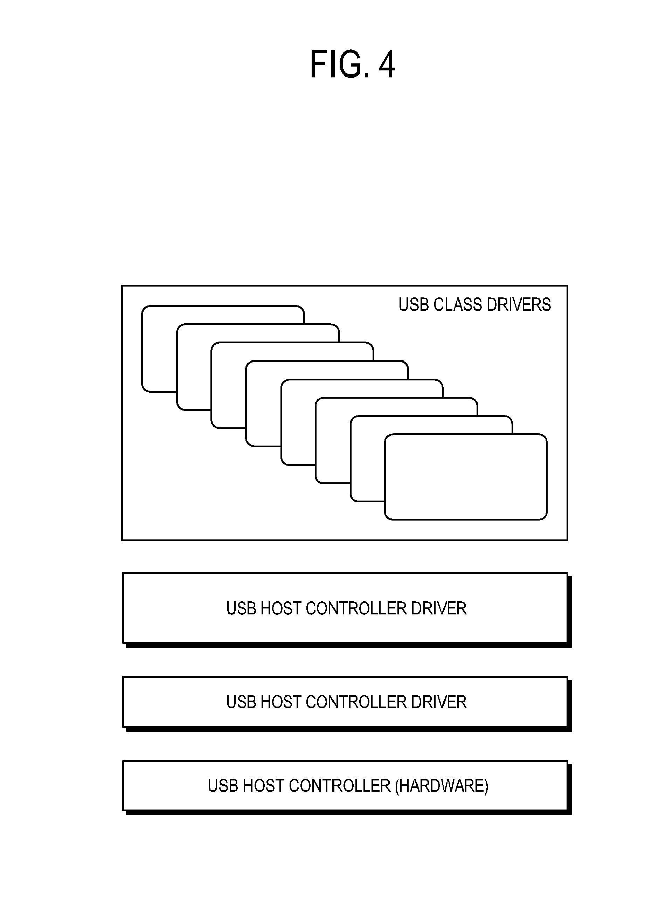

The USB class drivers is shown in FIG. 4.

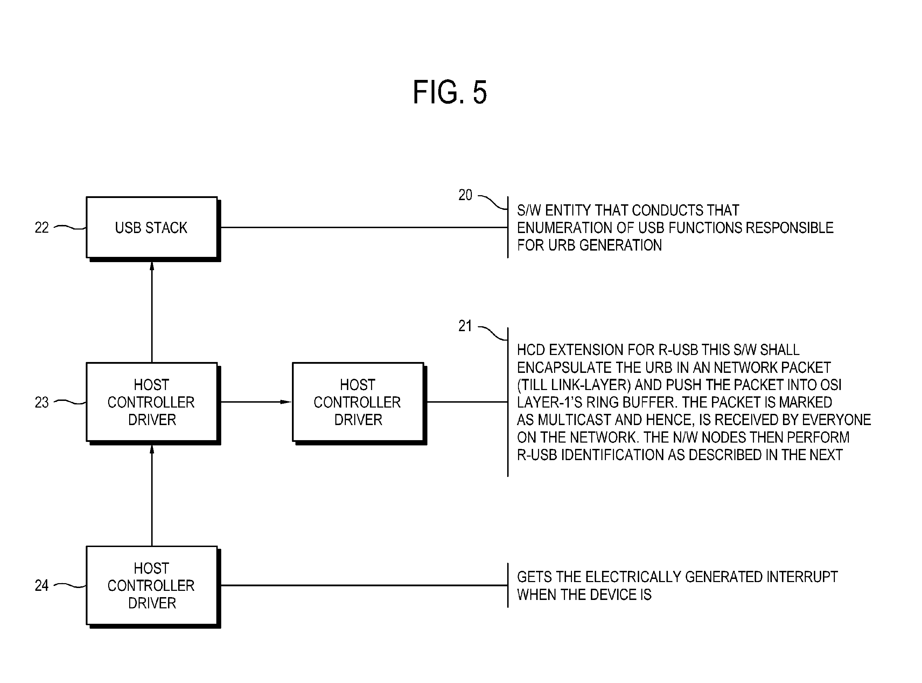

FIG. 5 shows a schematic view of the procedure before the electronic apparatus 100 in this exemplary embodiment broadcasts the presence of the multimedia data to the plurality of external devices 300.

Referring to FIG. 5, the electronic apparatus 100 may comprise a network stack, which can be modified without using any additional device or hardware, like an adapter. That is, the modification of the network stack may enable the host-controller driver to trigger the enumeration process on a software interrupt. This modification may be used to simulate the USB-function discovery on the plurality of external devices capable of remotely processing the multimedia data.

Also, the USB host stack has to start an upstream/downstream USB Request Block (URB) to the network stack. A host controller driver (HCB) of the USB host stack has to be able to copy the upstream or downstream USB-request-blocks (URB) and route to the network stack (OSI stack is used as an example, here and in further description) included in the plurality of external devices connected via the network. This capability of the host-controller driver is needed exchange command-response between the plurality of external devices and for the transfer of data.

At this time, the HCB generates appropriate protocol encapsulation (e.g., network-data-representation header) for the URBs, thereby impersonating normal packets on the piggyback network.

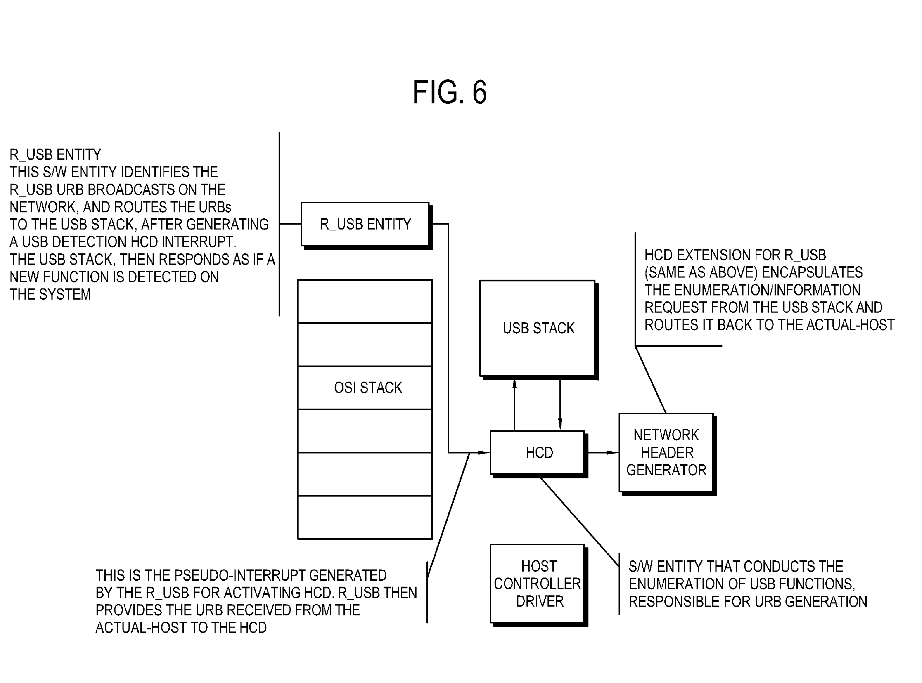

FIG. 6 is a schematic view showing that the plurality of external devices 300 receiving the URB from the electronic apparatus respond to the broadcasting.

The network stack included in the external device 200 that receives the URB has to allow insertion of data transmitted from multiple sources.

The software stack for the network, which carries the encapsulated URBs, has to allow its data-flow mechanism to serve multiple data-producers. This is needed to enable data-flow over protocol boundaries. The protocol syntax is, however, not violated because the URB data is appropriately encapsulated, to make it look like normal target-network-data.

The case of reception of URB data on a node is handled in a different manner. The data-packet containing a URB packet is received by the target-stack on the server and may be treated like a normal data packet until it reaches session layer. Here an application-server (depicted as 'R-USB entity' in the diagram) receives the URB data, records it, performs any user-defined/operation-defined tasks and then routes the URB data to the Host-Controller driver, with the pre-configured software interrupt.

Meanwhile, the plurality of external devices 300 may be represented as a remote-USB-enabled node, and each remote-USB-enabled node must have the capability to broadcast its remote-USB-network-ID when it comes alive.

This is necessary to obviate the necessity of making any peer-to-peer connections during the peer-node-discovery time, thus ensuring that the method described in this patent is scalable.

Below, an operation of a network which can share the USB functions of the electronic apparatus in this exemplary embodiment on the plurality of external devices 300 which communicate with the electronic apparatus 100 via the network will be described.

### 1. Network Setup

The 'network setup', in perspective of this method, pertains to the initialization of communication channel(s) among the electronic apparatus 100 and the plurality of external devices 300. This procedure may need some extra steps, which may reduce the negotiation time during the actual transfer of control.

### a. Network Node Discovery

The plurality of external devices 300 each broadcasts its presence to other nodes using the native methods of the network protocol. Further, it must announce its presence, with a unique remote-USB-network signature. This unique signature may be used as the network identity (ID) for all remote-USB-network communication. Here, the remote-USB-network communication means network communication between the electronic apparatus to which peripheral devices are connected and the plurality of external devices. Further, the node means the external device communicates within the network.

### b. Exchange of Media Capability Description

The remote-USB-aware network uses a system of pre-cached media capability to efficiently decide the nodes that may take over the control of data on the passive USB function, once connected. The media-capability-description is an extendable set of {capability-feature, level of capability, and a short user-readable description}. The media description can be maintained by each network node in a mesh-connected network. However, star-connected networks offer themselves to a scenario where media descriptions for all nodes are maintained on a central media-server, which is accessed for deciding upon the set of appropriate nodes to be used for a control-transfer. In both star-connected and mesh-connected networks, the nodes have the option of storing a set of personal-preferences for each available node. Further, both the data-bases (media description data-base and per-node preference database) may be edited by the user using any node on.

### 2. Providing access to local-USB-function data to a remote node

There exist many ways in which data on the electronic apparatus 100 may be made available to the remote nodes. This subsection describes both the generic steps involved and the specific use-cases for the access-provisions.

The following steps provide an overview of steps involved in transfer of control:
Announcement of newly connected USB function

The electronic apparatus 100 may broadcast the presence of a USB function on the network, when it is ready to enable access to the plurality of external devices 300. This may happen on a user-control basis or on a pre-configured basis.

To allow the access of a USB function's data, the Host-Controller driver on the electronic apparatus may generate a Device-Description URB, and may tee-off this URB into the network stack, after appropriately encapsulating the URB data in a network-specific frame. This frame is intended for a single remote-host that is selected using a user-input and/or media-capability description shared during the network setup stage. Alternatively, this frame may be multi-cast on the network (using its native capabilities or by a repeat transmission, using the network-stack modification). All the available remote hosts may respond to this broadcast, and their enumeration-procedure URBs may be filtered by the electronic apparatus, taking a cue from a user input and/or the media-capability description from the database-server. Although this mechanism leads to higher network-data traffic, but this approach may find use-cases in the scenario where the primary host uses the reply transmission speed to gauge the speed of connectivity with a remote node.

### Remote node's enumeration process

On reception of Device-Description encapsulated URB, the 'R-USB entity' generates a pseudo-interrupt for the USB stack, which fires up the enumeration process on the remote host. The remote host then continues to enumerate the USB device, as if connected to it physically. On the remote host's USB stack, the host-controller driver routes all the packets to its network stack, adhering to the protocol-frame requirements of the network. All the encapsulated enumeration-URBs are marked for the electronic apparatus, where these are routed back from the network stack to the USB stack via 'R-USB entity'.

This mechanism of transfer of URBs between the electronic apparatus 100 and the plurality of external devices 300 may continue as many times as needed for the remote USB connection to be set up. It is important to note that all the URB flow takes place through the R-USB entity, which allows the developer to put in place a mechanism to filter and control the incoming requests and out-flowing data.

### Data transfer between Remote node and USB function

As the flow of URBs is maintained as it would be in a physical connection, the bulk transfer requests and isochronous requests pose no problem in the current situation in theory. However, this area can pose a problem during implementation. To solve this, the 'R-USB entity' may expose an interface for speed-control based on transfer-speed profiles provided in USB specification. This interface may also contain suggestions regarding the most appropriate transfer-speed profile, depending on network connectivity. This may then be enforced during the Remote node's enumeration process and hence, the rate of data-transfer can be adjusted as per network conditions and media requirements.

The process of accessing data on the USB-Function can be initiated either by the electronic apparatus or by the plurality of remote external devices. There also exists a case in which the user might want to maintain a supervisor-level permission on all such connections being made in the network under concern.

### a. Hand-off by the electronic apparatus

In this connection mode, the electronic apparatus 100 initiates the process of handing-off the access of USB Function data to an appropriate remote external device 300. As explained, the electronic apparatus may announce the presence of the USB Function to a remote external device, which is selected using user input and/or capability description.

This method caters to the use-cases where
1. The user wishes to move to a different location, and still wants to continue accessing some data from the USB Function connected to his current local network node.
2. The user's current local network node is incapably/poorly-equipped to handle the data on USB and another local network node possesses the capability (or a better degree of capability) but is incapable of hosting a USB function.

### b. Take-over by a network node

In this connection mode, a remote node initiates the process of initiating access of the USB Function data. This method caters to the following use-case.
3. Disconnection of a USB Function
4. Disconnection of a network node

Thus, the exemplary embodiment provides a method to transfer control of files present on a peripheral USB device 200, which is connected via the electronic apparatus 100 to one of the plural external devices 300 on any network.

The exemplary embodiment presents a method to transfer a file, which is available on one of the electronic apparatus 100 (e.g. TV) on the network, and this node doesn't have the capability to process this file, and o use the processing capability available on another external device 300 in the available network.

The exemplary embodiment modifies the network stack on the electronic apparatus 100, without using any additional device/ hardware such as an adapter.

The modification pertains to enabling the Host-Controller driver of the electronic apparatus to trigger the enumeration process on a software interrupt. This modification may be used to simulate the function-discovery on a remote external device.

The electronic apparatus in this exemplary embodiment incorporates tee-ing of the upstream or downstream USB-Request-Blocks and route to another network stack. This capability of the Host-Controller driver of the electronic apparatus is needed for exchange of command-response to the USB function and for transfer of data between the remote external devices.

Although a few exemplary embodiments have been shown and described, it will be appreciated by those skilled in the art that changes may be made in these exemplary embodiments without departing from the principles of the invention, the scope of which is defined in the appended claims.

## Claims

1. An electronic apparatus comprising:
a connector, which is connected to a peripheral device which stores multimedia data;
a communication unit, which communicates with a plurality of external devices through a network; and
a controller which controls the communication unit to broadcast a presence of the multimedia data to the plurality of external devices, and transmits the multimedia data to an external device of the plurality of external devices which responds to the broadcast.

2. The electronic apparatus according to claim 1, further comprising a data processor which processes the multimedia data,
wherein the controller determines whether the data processor can process the multimedia data, and controls the communication unit to broadcast the presence of the multimedia data to the plurality of external devices if it is determined that the data processor cannot process the multimedia data.

3. The electronic apparatus according to claim 2, wherein the controller controls the communication unit to request information about a capability of each external device to process the multimedia data, and receives a response which corresponds to the request if the plurality of external devices responds to the broadcast, and selects an optimal external device among the plurality of external devices to process the multimedia data based on the response.

4. The electronic apparatus according to claim 3, wherein the controller controls the communication unit to receive converted multimedia data from the selected external device.

5. The electronic apparatus according to claim 2, wherein the controller controls the connector to request device information of the peripheral device, and controls the communication unit to encapsulate and broadcast the device information which corresponds to the request to the plurality of external devices.

6. The electronic apparatus according to claim 5, wherein the external device which responds to the broadcasting logically recognizes the peripheral device based on received encapsulated device information, and
the controller controls the communication unit to route the multimedia data to a corresponding external device.

7. The electronic apparatus according to claim 1, wherein the peripheral device comprises a USB device.

8. The electronic apparatus according to claim 7, wherein the controller generates a software interrupt and starts procedure of recognizing the USB device if the USB device is connected to the connector.

9. A method of controlling an electronic apparatus, the method comprising:
broadcasting a presence of multimedia data stored in a peripheral device connected by a connector to a plurality of external devices; and
controlling a communication unit to transmit the multimedia data to an external device among the plurality of external devices responding to the broadcasting.

10. The method according to claim 9, further comprising determining whether a data processor can process the multimedia data,
wherein the broadcasting comprises broadcasting the presence of the multimedia data to the plurality of external devices if it is determined that the data processor cannot process the multimedia data.

11. The method according to claim 10, further comprising
requesting information about a capability of each external device to process the multimedia data, and receiving a response corresponding to the request if the plurality of external devices respond to the broadcasting; and
selecting an optimal external device among the plurality of external devices to process the multimedia data based on the response.

12. The method according to claim 11, further comprising receiving converted multimedia data from the selected external device.

13. The method according to claim 10, further comprising requesting device information of the peripheral device and receiving information corresponding to the request,
wherein the broadcasting comprises encapsulating and broadcasting the device information corresponding to the request to the plurality of external devices.

14. The method according to claim 13, wherein the external device responding to the broadcasting logically recognizes the peripheral device based on the received encapsulated device information.

15. The method according to claim 9, wherein the peripheral device comprises a USB device.
